# EUROPÄISCHE PATENTANMELDUNG

(11) **EP 2 113 688 A1**
(43) Veröffentlichungstag der Anmeldung: **04.11.2009**
(21) Anmeldenummer: 09158317.9
(22) Anmeldetag: 21.04.2009
(51) Int. Cl.: F16H 57/00, F16F 15/16, F16H 61/00

(54) **Druckfluidversorgung für eine Druckfluid-Torsionsschwingungsdämpferanordnung**

(30) Priorität: 30.04.2008 DE 102008001495
(71) Anmelder: ZF Friedrichshafen AG, 88038 Friedrichshafen (DE)
(72) Erfinder: Dögel, Thomas, 97688 Bad Kissingen (DE); Busold, Thomas, 36039 Fulda (DE)

(57) **Zusammenfassung**

Eine Druckfluidversorgung für eine Druckfluid-Torsionsschwingungsdämpferanordnung im Antriebsstrang eines Fahrzeugs umfasst eine Druckfluidquelle (50, 52) für ein Automatikgetriebe, eine Druckwandleranordnung (78) zur Wandlung des von der Druckfluidquelle (50, 52) erzeugten Fluiddrucks zu einem höheren Druck und eine Arbeitsdruckspeicheranordnung (76) zur Speicherung des von der Druckwandleranordnung (78) generierten höheren Drucks eines Arbeitsfluids für die Druckfluid-Torsionsschwingungsdämpferanordnung (10).

## Beschreibung

Die vorliegende Erfindung betrifft eine Druckfluidversorgung für eine Druckfluid-Torsionsschwingungsdämpferanordnung im Antriebsstrang eines Fahrzeugs sowie ein Drehmomentübertragungssystem mit einer Druckfluid-Torsionsschwingungsdämpferanordnung.

Zur Drehmomentübertragung in Antriebssträngen von Fahrzeugen werden zum Dämpfen von Drehungleichförmigkeiten verschiedene Arten von Torsionsschwingungsdämpferanordnungen eingesetzt. Druckfluid-Torsionsschwingungsdämpferanordnungen, auch bekannt als Gasfeder-Torsionsschwingungsdämpfer, arbeiten dabei mit einem im Allgemeinen inkompressiblen Fluid, welches bei Relativdrehung zwischen einer Primärseite und einer Sekundärseite der Torsionsschwingungsdämpferanordnung gefördert bzw. verdrängt wird, um den Druck zu erhöhen. Dieser erhöhte Druck des Fluids wirkt einer weiteren Relativdrehung zwischen Primärseite und Sekundärseite entgegen bzw. erzeugt eine diese in Richtung einer Neutral-Relativdrehlage zurückbelastende Rückstellkraft. Die Speicherung dieses Fluiddrucks erfolgt im Allgemeinen über ein kompressibles Fluid, wie zum Beispiel Gas, welches durch das bei Relativdrehung verdrängte bzw. geförderte Fluid belastet und somit verstärkt komprimiert wird.

Um den Druck des Fluids in einer derartigen Druckfluid-Torsionsschwingungsdämpferanordnung aufrechtzuerhalten, also möglicherweise auftretende Fluidleckagen zu kompensieren, und um beispielsweise auch durch externe Variation dieses Drucks die Dämpfungscharakteristik einer derartigen Torsionsschwingungsdämpferanordnung beeinflussen zu können, kann der die Primärseite und die Sekundärseite umfassende rotierende Systembereich einer derartigen Druckfluid-Torsionsschwingungsdämpferanordnung über eine Drehdurchführung in Verbindung gebracht werden mit einer Quelle für unter vergleichsweise hohem Druck stehendes Arbeitsfluid. Durch Variation des Fluiddrucks von außen her kann beispielsweise bei Erhöhung dieses Drucks eine härtere Dämpferkennlinie vorgegeben werden bzw. einer übermäßig starken bzw. übermäßig schnellen Relativdrehung zwischen der Primärseite und der Sekundärseite entgegengewirkt werden.

Es ist die Aufgabe der vorliegenden Erfindung, eine Druckfluidversorgung für eine Druckfluid-Torsionsschwingungsdämpferanordnung im Antriebsstrang eines Fahrzeugs vorzusehen, welche bei vergleichsweise einfachem Aufbau dazu in der Lage ist, zuverlässig den für eine derartige Torsionsschwingungsdämpferanordnung erforderlichen hohen Druck eines Fluids bereitzustellen.

Erfindungsgemäß wird diese Aufgabe gelöst durch eine Druckfluidversorgung für eine Druckfluid-Torsionsschwingungsdämpferanordnung im Antriebsstrang eines Fahrzeugs, umfassend eine Druckfluidquelle für ein Automatikgetriebe, eine Druckwandleranordnung zur Wandlung des von der Druckfluidquelle erzeugten Fluiddrucks zu einem höheren Druck und eine Arbeitsdruckspeicheranordnung zur Speicherung des von der Druckwandleranordnung generierten höheren Drucks eines Arbeitsfluids für die Druckfluid-Torsionsschwingungsdämpferanordnung.

Die vorliegende Erfindung nutzt den zur Versorgung bzw. Betätigung eines Automatikgetriebes bzw. damit in Zusammenhang stehende Systemkomponenten generierten Fluiddruck, um daraus vermittels einer Druckwandleranordnung einen höheren Druck eines Arbeitsfluids für die Druckfluid-Torsionsschwingungsdämpferanordnung zu erzeugen. Im Allgemeinen überschreitet der für ein Automatikgetriebe bzw. damit zusammenwirkende Systembereiche generierte Fluiddruck einen Bereich von etwa 18-20 bar nicht. Dieser Druck ist jedoch für eine Druckfluid-Torsionsschwingungsdämpferanordnung deutlich zu nieder. Diese erreichen insbesondere bei vergleichsweise starken Drehmomenschwankungen bzw. großen zu übertragenden Drehmomenten Drücke von bis zu 70 bar. Da bei der erfindungsgemäßen Druckfluidversorgung jedoch der für ein Automatikgetriebe bereitgestellte Ausgangsdruck genutzt wird, um einen höheren Druck des Arbeitsfluids zu generieren, kann auf das Bereitstellen zusätzlicher Druckfluidquellen verzichtet werden.

Beispielsweise kann vorgesehen sein, dass die Druckwandleranordnung einen durch das von der Druckfluidquelle bereitgestellte Druckfluid antreibbaren Fluidmotor und eine durch den Fluidmotor antreibbare Fluidpumpe umfasst. Dieser Fluidmotor kann über einen Fluidversorgungsleitungsbereich mit von der Druckfluidquelle bereitgestelltem Druckfluid gespeist werden.

Um dafür zu sorgen, dass auch für die Druckfluid-Torsionsschwingungsdämpferanordnung immer ein minimaler Fluiddruck bereitgestellt ist, welcher im Wesentlichen auch dem durch die Druckfluidquelle generierten Fluiddruck entspricht, wird vorgeschlagen, dass der Fluidversorgungsleitungsbereich über eine erste Rückschlagventilanordnung in Verbindung mit einem von der Fluidpumpe mit Arbeitsfluid für die Druckfluid-Torsionsschwingungsdämpferanordnung gespeisten druckseitigen Leitungsbereich steht, wobei die erste Rückschlagventilanordnung einen Fluidstrom im Wesentlichen nur von dem Fluidversorgungsleitungsbereich zu dem druckseitigen Leitungsbereich zulässt.

Das zum Antreiben bzw. Erregen des Druckfluidmotors genutzte und von der Druckfluidquelle geförderte Druckfluid kann diesen Fluidmotor über einen Fluidabführleitungsbereich verlassen, der vorzugsweise zu einem Fluidreservoir führt. Um dabei eine Druckbegrenzungsfunktionalität sicherzustellen, wird weiter vorgeschlagen, dass in dem Fluidabführleitungsbereich eine zweite Rückschlagventilanordnung vorgesehen ist, wobei die zweite Rückschlagventilanordnung im Wesentlichen nur einen Fluidstrom von dem Fluidmotor weg zulässt. Diese zweite Rückschlagventilanordnung kann einen Öffnungsdruck im Bereich von 0,05 bar bis 0,5 bar, vorzugsweise 0,1 bar bis 0,3 bar aufweisen.

Bei einer besonders vorteilhaften Ausgestaltungsvariante wird vorgeschlagen, dass ein von der Fluidpumpe mit Arbeitsfluid für die Druckfluid-Torsionsschwingungsdämpferanordnung gespeister druckseitiger Leitungsbereich über eine dritte Rückschlagventilanordnung an die Fluidpumpe anschließt, wobei die dritte Rückschlagventilanordnung im Wesentlichen nur einen Fluidstrom von der Fluidpumpe weg zulässt. Auf diese Art und Weise wird sichergestellt, dass der durch die Fluidpumpe generierte hohe Druck des Arbeitsfluids gespeichert wird, auch wenn der Fluidmotor bzw. die Fluidpumpe nicht arbeiten. Die Rückspeisung von unter vergleichsweise hohem Druck stehendem Fluid bzw. Arbeitsfluid beispielsweise in ein Reservoir kann dadurch verhindert werden.

Bei einer weiteren vorteilhaften Ausgestaltungsvariante kann vorgesehen sein, dass in einem zur Fluidpumpe führenden Fluidaufnahmeleitungsbereich eine vierte Rückschlagventilanordnung vorgesehen ist, wobei die vierte Rückschlagventilanordnung im Wesentlichen nur einen Fluidstrom zur Fluidpumpe zulässt. Dadurch ist sichergestellt, dass ein Fluidleitungsbereich vor der Fluidpumpe immer mit Fluid gefüllt ist und somit auch am Beginn des Förderbetriebs der Fluidpumpe bereits Fluid und nicht beispielsweise Luft gefördert wird.

Bei einer baulich sehr einfach zu realisierenden Ausgestaltung wird vorgeschlagen, dass der Fluidmotor zwei miteinander in Kämmeingriff stehende und durch den Fluiddruck zur Drehung antreibbare Antriebszahnräder umfasst und dass die Fluidpumpe bei Drehung der Antriebszahnräder des Fluidmotors zur Drehung angetriebene Förderräder umfasst.

Dabei kann weiter vorgesehen sein, dass die Förderräder in Kämmeingriff stehende Zahnräder sind.

Zur Speicherung des vergleichsweise hohen Drucks des Arbeitsfluids wird vorgeschlagen, dass die Arbeitsdruckspeicheranordnung ein Volumen von durch das Arbeitsfluid für die Druckfluid-Torsionsschwingungsdämpferanordnung belastbarem, kompressiblem Medium, vorzugsweise Gas, umfasst.

Gemäß einer besonders vorteilhaften Variante wird vorgeschlagen, dass der durch die Druckwandleranordnung maximal generierbare Druck des Arbeitsfluids im Bereich eines für die Druckfluid-Torsionsschwingungsdämpferanordnung erforderlichen Fluiddrucks liegt. Auf diese Art und Weise wird sichergestellt, dass der durch die Druckwandleranordnung generierte Druck des Arbeitsfluids auch bei permanenter Erregung derselben nicht über denjenigen Druck hinausgehen kann, der für die Druckfluid-Torsionsschwingungsdämpferanordnung erforderlich bzw. bereitzustellen ist. Es sind somit keine Druckbegrenzungsmaßnahmen, wie zum Beispiel ein Drucksensor und das Beenden des Betriebs des Druckwandlers dann, wenn der Sensor einen zu hohen Druck indiziert, oder ein Druckbegrenzungsventil oder dergleichen erforderlich.

Die vorliegende Erfindung betrifft ferner ein Drehmomentübertragungssystem für den Antriebsstrang eines Fahrzeugs, umfassend eine Druckfluid-Torsionsschwingungsdämpferanordnung mit einer Primärseite und einer gegen die Wirkung wenigstens einer Fluiddruckspeicheranordnung bezüglich der Primärseite um eine Drehachse drehbaren Sekundärseite, ferner umfassend ein Automatikgetriebe mit einem mit der Sekundärseite der Torsionsschwingungsdämpferanordnung gekoppelten Eingangsbereich und eine erfindungsgemäße Druckfluidversorgung zur Bereitstellung von unter Druck stehendem Arbeitsfluid für die wenigstens eine Fluiddruckspeicheranordnung.

Die vorliegende Erfindung wird nachfolgend mit Bezug auf die beiliegenden Zeichnungen detailliert beschrieben. Es zeigt
- Fig. 1: in prinzipartiger Darstellung eine Druckfluid-Torsionsschwingungs-dämpferanordnung;
- Fig. 2: eine Druckfluidversorgung für eine Druckfluid-Torsions-schwingungsdämpferanordnung;
- Fig. 3: eine Schnittansicht einer Druckwandleranordnung;
- Fig. 4: die Druckwandleranordnung der Fig. 3, geschnitten längs einer Linie IV - IV in Fig. 3;
- Fig. 5: eine der Fig. 3 entsprechende Darstellung einer alternativen Ausgestaltungsart einer Druckwandleranordnung.

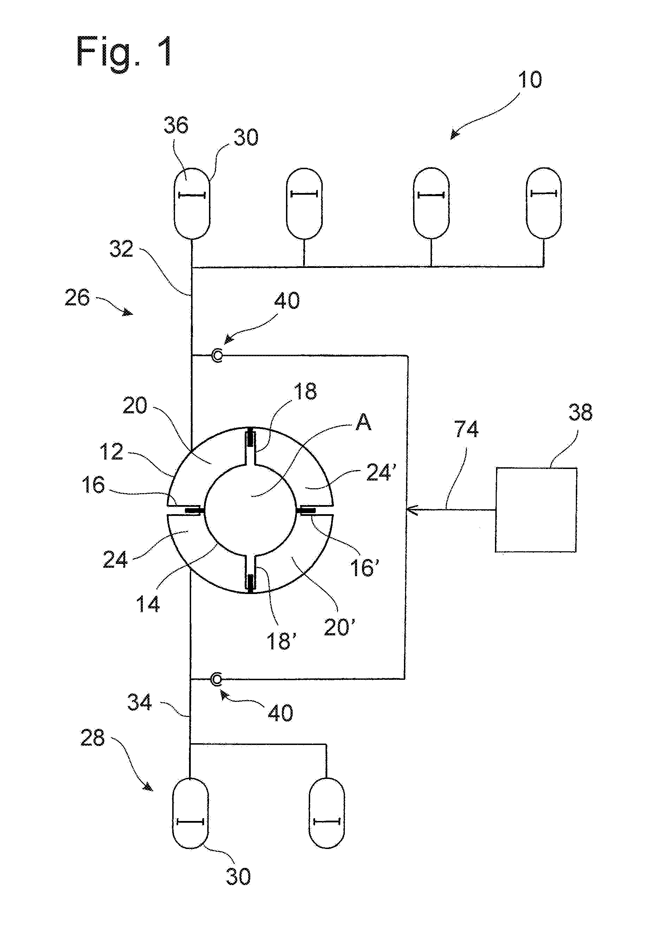

In Fig. 1 ist eine Druckfluid-Torsionsschwingungsdämpferanordnung allgemein mit 10 bezeichnet. Eine derartige als Gasfeder-Torsionsschwingungsdämpfer bezeichnete Torsionsschwingungsdämpferanordnung 10 umfasst eine nur prinzipartig dargestellte Primärseite 12, die beispielsweise mit einer als Antriebswelle dienenden Kurbelwelle zur gemeinsamen Drehung um eine Drehachse zu verbinden ist. Eine Sekundärseite 14 der Torsionsschwingungsdämpferanordnung 10 ist grundsätzlich bezüglich der Primärseite 12 um die Drehachse A drehbar und ist mit dem folgenden Bereich eines Antriebsstangs, beispielsweise einer Getriebeeingangswelle, dem Eingangsbereich eines hydrodynamischen Drehmomentwandlers, einer Kupplungsanordnung oder dergleichen verbunden. Die Primärseite 12 und die Sekundärseite 14 begrenzen mit jeweiligen flügelartigen Wandlungsbereichen 16, 16' bzw. 18, 18' Druckkammern 20, 20' und 24, 24'. Dabei sind die Druckkammern 20, 20' sowie die Druckkammern 24, 24' einander paarweise zugeordnet. Drehen sich Primärseite 12 und Sekundärseite 14 in einer Relativdrehrichtung bezüglich einander, so wird beispielsweise das Volumen der beiden Druckkammern 20, 20' verringert, während das Volumen der beiden Druckkammern 24, 24' entsprechend zunimmt. Bei Relativdrehung in der entgegengesetzten Richtung kehren sich diese Verhältnisse selbstverständlich um.

Für jede Relativdrehrichtung, also für jedes in einem Relativdrehzustand hinsichtlich seines Volumens verringertes Paar von Druckkammern, ist eine Fluiddruckspeicheranordnung 26 bzw. 28 vorgesehen. Jeder dieser Fluiddruckspeicheranordnungen 26, 28 umfasst eine Mehrzahl von Energie- bzw. Druckspeichern 30. Bei Anstieg des Drucks eines grundsätzlich in den Druckkammern 20, 20', 24, 24' enthaltenen und bei Relativdrehung aus diesen verdrängten Fluids in einem jeweiligen Fluidleitungsbereich 32 bzw. 34 zwischen den Druckkammern 20, 20' bzw. 24, 24' und den diesen zugeordneten Druck- bzw. Energiespeichern 30 wird ein komprimierbares Medium in diesen, beispielsweise Gas, in einem Volumen 36 komprimiert und somit Energie bzw. Druck gespeichert. Dieser wirkt über die Leitungsbereiche 32 bzw. 34 auf die Primärseite 12 bzw. Sekundärseite 14 zurück und sorgt somit für eine diese in einer Neutral-Relativdrehlage vorspannende Rückstellkraft.

Durch die Vorgabe der Anzahl der Energie- bzw. Druckspeicher 30, die also als so genannte Gasfedern ausgebildet sein können, und durch die Vorgabe des in der Neutral-Relativdrehlage grundsätzlich vorhandenen Fluiddrucks in den Leitungsbereichen 32, 34 ist es möglich, die Dämpfungscharakteristik der Torsionsschwingungsdämpferanordnung 10 vorzugeben bzw. zu variieren. Diese Dämpfungscharakteristik kann dadurch beeinflusst werden, dass über eine externe Druckfluidversorgung 38 und eine Drehdurchführung 40 jedem der Leitungsbereiche 32, 34 unter Druck stehendes Fluid zugeführt wird. Somit kann während des Betriebs durch Erhöhen des Fluiddrucks die Torsionsschwingungsdämpferanordnung 10 auf eine härtere Kennung eingestellt werden bzw. durch Verringerung des Fluiddrucks eine weichere Kennung gewählt werden. Auch ist es möglich, durch Nachspeisen von Fluid möglicherweise auftretende Fluidleckagen zu kompensieren. Die Verbindung der Leitungsbereiche 32, 34 mit der Druckfluidversorgung bzw. auch einem im Wesentlichen drucklosen Reservoir kann durch in einem nicht rotierenden Systembereich, also zwischen der Drehdurchführung 40 und der Druckfluidversorgung 38 angeordnete Ventile erfolgen, die wahlweise eine Verbindung mit den Leitungsbereichen 32, 34 herstellen oder unterbrechen. Auch ist es möglich, im rotierenden Systembereich, also an der Primärseite 12 bzw. der Sekundärseite 14, eine Ventilanordnung vorzusehen, die beispielsweise auch abhängig von der Relativdrehlage die Verbindung der Leitungsbereiche 32, 34 mit der Druckfluidversorgung 38 oder ggf. auch einem im Wesentlichen drucklosen Reservoir sicherstellt.

Es sei darauf hingewiesen, dass vorangehend mit Bezug auf die Fig. 1 eine Druckfluid-Torsionsschwingungsdämpferanordnung 10 nur in prinzipieller Hinsicht erläutert wurde. Es ist selbstverständlich, dass diese in verschiedensten Aspekte variiert werden kann. So kann beispielsweise an Stelle der zwischen der Primärseite 12 und der Sekundärseite 14 gebildeten Druckkammern, welche bei Relativdrehung Fluid verdrängen bzw. aufnehmen und somit für eine Fluidförderung sorgen, eine andere Förderanordnung, beispielsweise in der Art einer Zahnradpumpe oder einer Flügelradpumpe, vorgesehen sein, die dann auch in einem größeren, beispielsweise unbegrenzten Relativdrehwinkelbereich zwischen Primärseite 12 und Sekundärseite 14 arbeiten kann. Auch ist es selbstverständlich, dass die Anzahl der Druck- bzw. Energiespeicher 30 variiert werden kann und jeweils angepasst an die im Zugbetrieb und im Schubbetrieb auftretenden Erfordernisse gewählt werden kann.

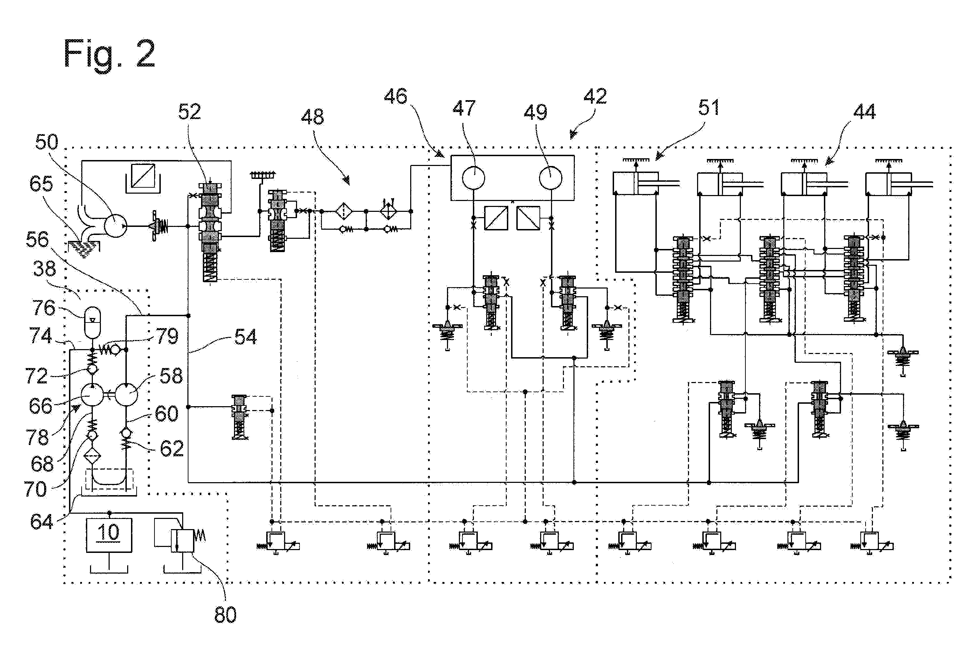

In Fig. 2 ist ein beispielsweise mit Öl arbeitendes Hydrauliksystem 42 dargestellt. Dieses dient grundsätzlich dazu, verschiedene mit unter Druck stehendem Fluid zu versorgende und dadurch ggf. auch anzusteuernde Systembereiche eines Fahrzeugs zu versorgen. So kann beispielsweise der in Fig. 2 ganz rechts erkennbare und in gepunktete Linie eingefasste Bereich 44 zur Betätigung eines Automatikgetriebes dienen. Es sei hier darauf hingewiesen, dass im Sinne der vorliegenden Erfindung unter dem Ausdruck "Automatikgetriebe" jedwedes automatisch bzw. automatisiert schaltendes Getriebe zu verstehen ist, insbesondere auch ein Getriebe mit stufenlos verstellbarem Übersetzungsverhältnis. Ein Bereich 46 kann zur Kupplungsbetätigung dienen, wobei hier selbstverständlich jedwede Art von Kupplung, wie zum Beispiel nasslaufende Kupplung, Doppelkupplung mit zwei Kupplungsbereichen oder Fluidkupplung angesprochen ist. Ein Bereich 48 kann generell zur Versorgung der durch Druckfluid zu betätigenden Systembereiche dienen. Im dargestellten Beispiel ist konkret eine Ausgestaltung für eine Doppelkupplung mit zwei anzusteuernden Kupplungsbereichen 47, 49 sowie ein automatisiert schaltendes Getriebe mit vier zur Gangwahl, also zum Ein- bzw. Auslegen von jeweils zwei Gangstufen dienenden Zylindereinheiten 51 gezeigt.

Links in Fig. 2 ist in einem ebenfalls in Punkte eingefassten Bereich ein wesentlicher Bereich der allgemein mit 38 bezeichneten Druckfluidversorgung für die Druckfluid-Torsionsschwingungsdämpferanordnung 10 dargestellt. Diese Druckfluidversorgung nutzt den generell für verschiedene Systembereiche eines Fahrzeugs durch eine Fluidpumpe 50, diese beispielsweise angetrieben aus der Rotation einer Antriebswelle eines Antriebsaggregats, erzeugten und durch ein Hauptdruckventil 52 weitergeleiteten bzw. regulierten Fluiddruck. Von einer Hauptdruckleitung 54 zweigt ein Fluidversorgungsleitungsbereich 56 für die Druckfluidversorgung 38 ab. Dieser Fluidversorgungsleitungsbereich leitet Fluid zu einem Fluidmotor 58, der das ihn durchströmende Fluid über einen Fluidabführleitungsbereich 60 und ein darin angeordnetes Rückschlagventil 62 abgibt. Dieses Rückschlagventil, welches einen Öffnungsdruck im Bereich von 0,1 bis 0,3 bar aufweisen kann, dient dazu, eine Druckbegrenzungsfunktion zu realisieren. Der Fluidabführleitungsbereich 60 führt zu einer Fluidrückführung 64, die beispielsweise den allgemein mit 65 bezeichneten Fluidsumpf umfassen kann.

Der Fluidmotor 58, der durch das aus der Hauptdruckleitung 54 abgezweigte Fluid angetrieben wird, treibt wiederum eine Fluidpumpe 66 an. Diese nimmt über einen Fluidaufnahmeleitungsbereich 68 und ein darin angeordnetes Rückschlagventil 70 Fluid beispielsweise aus der Fluidrückführung 64 bzw. generell einem Fluidreservoir auf. Das Rückschlagventil 70 sorgt dafür, dass eine vollständige Fluidentleerung der Fluidpumpe 66 nicht auftreten wird. Das unter Druck aus der Fluidpumpe 66 ausgestoßene Arbeitsfluid für die Druckfluid-Torsionsschwingungsdämpferanordnung 10 strömt über ein weiteres Rückschlagventil 72 zu einem Hochdruckleitungsbereich 74, der, wie dies die Fig. 1 auch veranschaulicht, dann über die Drehdurchführung zur Torsionsschwingungsdämpferanordnung 10 führt. An den Hochdruckleitungsbereich 70 ist eine Arbeitsdruckspeicheranordnung 76 angeschlossen, so dass der durch die Fluidpumpe 66 generierte Arbeitsfluiddruck im Hochdruckleitungsbereich 74 in dieser Arbeitsdruckspeicheranordnung 76 gespeichert werden kann und somit auch spontan bei entsprechendem Bedarf in Richtung Torsionsschwingungsdämpferanordnung 10 abgegeben werden kann.

Es sei darauf hingewiesen, dass beispielsweise der Fluidmotor 58 als Kolbenmaschine mit einer vergleichsweise großen Kolbenfläche ausgebildet sein kann, die, angetrieben durch den Druck des im Fluidzuführleitungsbereich 56 heranströmenden Fluids, eine periodische Hin- und Herbewegung generiert und dabei einen Arbeitskolben der Fluidpumpe 66 antreibt, der eine entsprechend kleinere Kolbenfläche aufweist. Durch dieses Flächenverhältnis ist im Wesentlichen auch das Verhältnis definiert, in welchem der in der Hauptdruckleitung 54 vorherrschende Fluiddruck verstärkt werden kann.

Über ein weiteres Rückschlagventil 79 ist der Fluidversorgungsleitungsbereich 56 in Verbindung mit dem Hochdruckleitungsbereich 74, wobei dieses Rückschlagventil 79 eine Fluidströmung nur aus dem Fluidversorgungsleitungsbereich 56 zum Hochdruckleitungsbereich 74 zulässt. Somit ist sichergestellt, dass zumindest der auch in der Hauptdruckleitung 54 vorherrschende Fluiddruck im Hochdruckleitungsbereich 74 und somit am Eingangsbereich der Drehdurchführung 40 anliegt, was in einer Motorstartphase eine Versorgbarkeit der Torsionsschwingungsdämpferanordnung 10 zumindest mit unter dem Druck der Hauptdruckleitung 54 stehendem Fluid gewährleistet. Dieser Druck liegt im Allgemeinen bei 18 bis 20 bar.

Bei der erfindungsgemäßen Ausgestaltung der Druckfluidversorgung bildet also der Fluidmotor 58 zusammen mit der Fluidpumpe 60 eine Druckwandleranordnung 78, welche den Druck der Hauptdruckleitung 54 umwandelt in einen Arbeitsfluiddruck für die Torsionsschwingungsdämpferanordnung 10, der um ein Vielfaches über dem Druck der Hauptdruckleitung 54 liegt. Dabei kann die Auslegung vorzugsweise derart sein, dass der durch die Druckwandleranordnung 78 maximal generierbare Druck des Arbeitsfluids für die Torsionsschwingungsdämpferanordnung 10 demjenigen Druck entspricht, wie er für den Betrieb der Torsionsschwingungsdämpferanordnung 10 erforderlich ist. Somit kann sichergestellt werden, dass auch bei permanent aktiver Druckwandleranordnung 78 ein übermäßig hoher Arbeitsfluiddruck im Hochdruckleitungsbereich 74 nicht entstehen kann. Ist diese Funktionalität nicht gewährleistet oder, um generell die Sicherheit zu erhöhen, kann grundsätzlich ein Druckregelventil 80 vorgesehen sein, welches im Wesentlichen parallel zur Torsionsschwingungsdämpferanordnung 10 liegt und dafür sorgt, dass der an der Drehdurchführung 40 angliegende Druck auf eine vorbestimmtes Maß begrenzt bzw. begrenzbar ist. Das über dieses Druckregelventil 80 abgegebene Fluid bzw. auch das beispielsweise als Leckagestrom aus der Torsionsschwingungsdämpferanordnung 10 abgegebene Fluid kann über eine Ölrückführung wieder in den normalen Fluidkreislauf eingespeist werden.

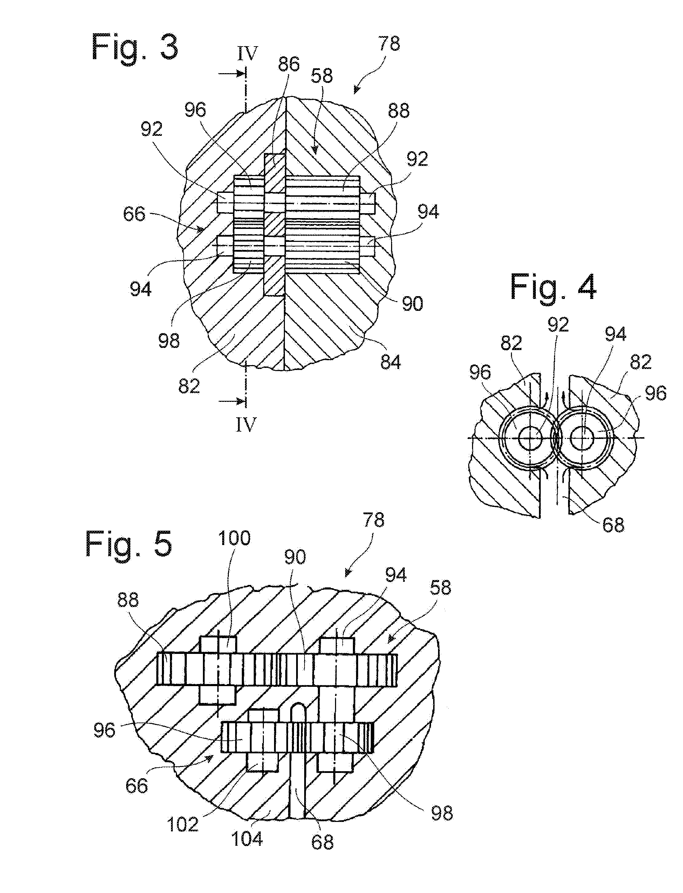

Eine als hydrostatischer Druckwandler ausgestaltete Druckwandleranordnung 78, die bei der erfindungsgemäßen Druckfluidversorgung in ein hydraulisches Steuergerät eines Fahrzeugs integriert vorgesehen sein kann, ist in den Fig. 3 und 4 gezeigt. Man erkennt in zwei Gehäuseteilen 82, 84 den Fluidmotor 58 sowie die Fluidpumpe 66, getrennt durch ein im Angrenzungsbereich der beiden Gehäuseteile 82, 84 vorgesehenes Wandungselement 86. Der Fluidmotor 58 umfasst zwei miteinander kämmende Zahnräder 88, 90, die auf Wellen 92, 94 drehfest getragen sind. Die Wellen 92, 94 erstrecken sich in beiden Gehäuseteilen 82, 84 und sind dort in ihren jeweiligen Endbereichen drehbar gelagert.

Auch die Fluidpumpe 66 umfasst zwei miteinander kämmende Zahnräder 96, 98, die ebenfalls auf den Wellen 92 bzw. 94 drehfest getragen sind. Die Wellen 92, 94 durchsetzen weiterhin die Trennwandung 86. Durch diese Trennwandung 86 sind im Wesentlichen der Bereich des Fluidmotors 58 und der Bereich der Fluidpumpe 66 voneinander getrennt. Der über den in Fig. 2 erkennbaren Fluidversorgungsleitungsbereich 56 auf die Zahnräder 88, 90 einwirkende Fluiddruck treibt diese zur Drehung an, wodurch gleichzeitig auch die beiden Zahnräder 96, 98 der Fluidpumpe 66 zur Drehung angetrieben werden. Da die Zahnräder 88, 90 des Fluidmotors 58 länger sind als die Zahnräder 96, 98 der Fluidpumpe 66, stellen die motorseitigen Zahnräder 88, 90 eine größere Wirkfläche für den Fluiddruck bereit, so dass eine Druckübersetzung bei Fördermengenuntersetzung erzeugt wird.

Bei der in Fig. 5 gezeigten Ausgestaltungsform eines Druckwandlers 78 weisen der Fluidmotor 58 und die Fluidpumpe 66 wieder die miteinander kämmenden Zahnräder 88, 90 bzw. 96, 98 auf. Nur die beiden Zahnräder 90, 98 sind wieder auf der gemeinsamen Welle 94 drehfest getragen und somit auch gemeinsam mit gleicher Drehzahl drehbar. Für die Zahnräder 88 bzw. 96 sind jeweils separate Wellen 100 bzw. 102 vorgesehen, die ebenso wie die Welle 94 in ihren Endbereichen in einem allgemein mit 104 bezeichneten Gehäuse drehbar getragen sind. Hier wird durch das Größenverhältnis der Zahnräder, insbesondere der pro Umdrehung der Zahnräder zum Antreiben bzw. Fördern wirksamen Zähne, selbstverständlich unter Berücksichtigung eines Wirkungsgrads sowohl im Bereich des Fluidmotors 58 als auch im Bereich der Fluidpumpe 66, eine Kraft- bzw. Druckübersetzung erzielt.

Mit der erfindungsgemäß vorgeschlagenen Fluiddruckversorgung, welche unter Ausnutzung des in einem Fluidversorgungssystem für ein Getriebe bzw. eine Kupplung oder einen hydrodynamischen Drehmomentwandler bereitgestellten Fluiddrucks arbeitet, wird es möglich, in einfacher Art und Weise einen sehr hohen Arbeitsdruck für das in die Torsionsschwingungsdämpferanordnung 10 zu speisende Fluid zu erzeugen. Wie bereits angeführt, kann hierzu außerhalb der rotierenden Systembereiche vermittels einer Ventilanordnung gezielt die Zuführung zu verschiedenen der Fluiddruckspeicheranordnungen 26, 28 gesteuert werden. Ist beispielsweise im rotierenden Systembereich ein Lagerregelventil angeordnet, welches abhängig von einer Relativdrehung zwischen Primärseite 12 und Sekundärseite 14 diese Strömungszuordnung vornimmt, kann ein derartiges System völlig ohne weitergehende regelungstechnische Maßnahmen, also Eingriffe von außen, arbeiten.

Durch das Eingliedern einer Fluiddruckwandleranordnung in ein hydraulisches Steuergerät für ein Fahrzeug wird eine sehr kompakte Bauweise erlangt, die das Vorsehen aufwendiger externer Fluidleitungen überflüssig macht.

## Patentansprüche

1. Druckfluidversorgung für eine Druckfluid-Torsionsschwingungsdämpferanordnung im Antriebsstrang eines Fahrzeugs, umfassend eine Druckfluidquelle (50, 52) für ein Automatikgetriebe, eine Druckwandleranordnung (78) zur Wandlung des von der Druckfluidquelle (50, 52) erzeugten Fluiddrucks zu einem höheren Druck und eine Arbeitsdruckspeicheranordnung (76) zur Speicherung des von der Druckwandleranordnung (78) generierten höheren Drucks eines Arbeitsfluids für die Druckfluid-Torsionsschwingungsdämpferanordnung (10).

2. Druckfluidversorgung nach Anspruch 1,
**dadurch gekennzeichnet, dass** die Druckwandleranordnung (78) einen durch das von der Druckfluidquelle (50, 52) bereitgestellte Druckfluid antreibbaren Fluidmotor (58) und eine durch den Fluidmotor (58) antreibbare Fluidpumpe (66) umfasst.

3. Druckfluidversorgung nach Anspruch 2,
**dadurch gekennzeichnet, dass** der Fluidmotor (58) über einen Fluidversorgungsleitungsbereich (56) mit von der Druckfluidquelle (50, 52) bereitgestelltem Druckfluid gespeist wird.

4. Druckfluidversorgung nach Anspruch 3,
**dadurch gekennzeichnet, dass** der Fluidversorgungsleitungsbereich (56) über eine erste Rückschlagventilanordnung (79) in Verbindung mit einem von der Fluidpumpe (66) mit Arbeitsfluid für die Druckfluid-Torsionsschwingungsdämpferanordnung (10) gespeisten druckseitigen Leitungsbereich (74) steht, wobei die erste Rückschlagventilanordnung (79) einen Fluidstrom im Wesentlichen nur von dem Fluidversorgungsleitungsbereich (56) zu dem druckseitigen Leitungsbereich (74) zulässt.

5. Druckfluidversorgung nach Anspruch 3 oder 4,
**dadurch gekennzeichnet, dass** von dem Fluidmotor (58) ein Fluidabführleitungsbereich (60) vorzugsweise zu einem Fluidreservoir (64) führt.

6. Druckfluidversorgung nach Anspruch 5,
**dadurch gekennzeichnet, dass** in dem Fluidabführleitungsbereich (60) eine zweite Rückschlagventilanordnung (62) vorgesehen ist, wobei die zweite Rückschlagventilanordnung (62) im Wesentlichen nur einen Fluidstrom von dem Fluidmotor (58) weg zulässt.

7. Druckfluidversorgung nach Anspruch 6,
**dadurch gekennzeichnet, dass** die zweite Rückschlagventilanordnung (62) einen Öffnungsdruck im Bereich von 0,05 bar bis 0,5 bar, vorzugsweise 0,1 bar bis 0,3 bar aufweist.

8. Druckfluidversorgung nach einem der Ansprüche 2 bis 7,
**dadurch gekennzeichnet, dass** ein von der Fluidpumpe (66) mit Arbeitsfluid für die Druckfluid-Torsionsschwingungsdämpferanordnung (10) gespeister druckseitiger Leitungsbereich (74) über eine dritte Rückschlagventilanordnung (72) an die Fluidpumpe (66) anschließt, wobei die dritte Rückschlagventilanordnung (72) im Wesentlichen nur einen Fluidstrom von der Fluidpumpe (66) weg zulässt.

9. Druckfluidversorgung nach einem der Ansprüche 2 bis 8,
**dadurch gekennzeichnet, dass** in einem zur Fluidpumpe (66) führenden Fluidaufnahmeleitungsbereich (68) eine vierte Rückschlagventilanordnung (70) vorgesehen ist, wobei die vierte Rückschlagventilanordnung (70) im Wesentlichen nur einen Fluidstrom zur Fluidpumpe zulässt.

10. Druckfluidversorgung nach einem der Ansprüche 2 bis 9,
**dadurch gekennzeichnet, dass** der Fluidmotor (58) zwei miteinander in Kämmeingriff stehende und durch den Fluiddruck zur Drehung antreibbare Antriebszahnräder (88, 90) umfasst und dass die Fluidpumpe (2) bei Drehung der Antriebszahnräder (88, 90) des Fluidmotors (58) zur Drehung angetriebene Förderräder (96, 98) umfasst.

11. Druckfluidversorgung nach Anspruch 10,
**dadurch gekennzeichnet, dass** die Förderräder (96, 98) in Kämmeingriff stehende Zahnräder (96, 98) sind.

12. Druckfluidversorgung nach einem der Ansprüche 1 bis 11,
**dadurch gekennzeichnet, dass** die Arbeitsdruckspeicheranordnung (76) ein Volumen von durch das Arbeitsfluid für die Druckfluid-Torsionsschwingungsdämpferanordnung (10) belastbarem, kompressiblem Medium, vorzugsweise Gas, umfasst.

13. Druckfluidversorgung nach einem der Ansprüche 1 bis 12,
**dadurch gekennzeichnet, dass** der durch die Druckwandleranordnung (78) maximal generierbare Druck des Arbeitsfluids im Bereich eines für die Druckfluid-Torsionsschwingungsdämpferanordnung (10) erforderlichen Fluiddrucks liegt.

14. Drehmomentübertragungssystem für den Antriebsstrang eines Fahrzeugs, umfassend eine Druckfluid-Torsionsschwingungsdämpferanordnung (10) mit einer Primärseite (12) und einer gegen die Wirkung wenigstens einer Fluiddruckspeicheranordnung (26, 28) bezüglich der Primärseite (12) um eine Drehachse (A) drehbaren Sekundärseite (14) ist, ferner umfassend ein Automatikgetriebe mit einem mit der Sekundärseite (14) der Torsionsschwingungsdämpferanordnung gekoppelten Eingangsbereich und eine Druckfluidversorgung (38) nach einem der vorangehenden Ansprüche zur Bereitstellung von unter Druck stehendem Arbeitsfluid für die wenigstens eine Fluiddruckspeicheranordnung (26, 28).
